# EUROPEAN PATENT APPLICATION

(11) **EP 4 566 913 A1**
(43) Date of publication of application: **11.06.2025**
(21) Application number: 23214161.4
(22) Date of filing: 05.12.2023
(51) Int. Cl.: B62B 7/00, B62B 7/06, B62B 7/08, B62B 7/10

(54) **BABY STROLLER FRAME FOLDING MECHANISM**

(71) Applicant: NIC Technology GmbH, 12435 Berlin (DE)
(72) Inventor: The designation of the inventor has not yet been filed
(74) Representative: Jeck, Jonathan

(57) **Abstract**

The disclosed subject matter pertains to a stroller framework with a central base frame and a swivelling lever for holding a child carrying module. The framework includes front and back wheels arranged on either end of the base frame. A distinctive feature of the framework is a folding mechanism that enables the wheels to fold towards the central base frame, thereby reducing the width of the stroller framework. The folding mechanism is actuated by a pivoting movement between the lever and the base frame, which is transmitted to the wheels, pulling them towards the central base frame. The framework may also include suspension arms for wheel arrangement and transmission elements for movement transmission.

## Description

### Introduction

### Field of the Invention

The present patent application pertains to the domain of child transportation devices, specifically to a stroller framework that incorporates an innovative folding mechanism for improved portability and convenience.

Modern stroller designs often present a variety of challenges that can make them difficult to use, particularly when it comes to their size and the complexity of their folding mechanisms. These strollers are often bulky, making them hard to maneuver, store, and transport. This bulkiness can be especially problematic in crowded urban environments, where space is at a premium, or when traveling, where compactness is a virtue. Furthermore, the process of folding these strollers for storage or transportation can be complex and time-consuming, often requiring multiple steps and a considerable amount of physical effort. This complexity can be a source of frustration for users, particularly when they are in a hurry or dealing with other tasks.

While the prior art has made attempts to address these issues, there is still a considerable room for improvement. Many existing solutions still fall short in terms of ease of use, compactness when folded, and the ability to fold and unfold the stroller using a single action. For instance, some designs may be easy to fold but remain bulky when folded, while others may be compact when folded but require a complex series of steps to fold and unfold. Furthermore, many designs require the use of both hands to fold and unfold the stroller, which can be inconvenient for users who are holding their child or other items.

Therefore, there is a clear and pressing desire for a stroller design that addresses these issues. Specifically, a stroller design that is easy to use, compact when folded, and can be folded and unfolded using a single action would represent a substantial improvement over the current state of the art. Such a design would make strollers more convenient and user-friendly, thereby enhancing their utility and appeal for consumers.

US-20070090628-A1 discloses a collapsible supporting structure for a stroller with a central mounting body and a supporting frame. However, the disclosed structure lacks a simplified single-action folding mechanism. The present patent application introduces a stroller framework that allows for a single-action folding mechanism, thereby simplifying the process.

US-20090278335-A1 presents a stroller design with a central linkage assembly and wheels. However, the folding mechanism collapses the frame itself in order to reduce the width of the stroller. The present invention addresses this issue by introducing a folding mechanism that pulls the wheels towards the central base frame, thereby reducing the width of the stroller when folded.

US-20120086187-A1 discloses a stroller with a swivelling lever connected to a child carrying module. However, the lever does not contribute to the folding mechanism. In contrast, the present invention provides a stroller framework where the swivelling lever contributes to the folding mechanism, thereby enhancing the ease of folding and unfolding the stroller.

US-20120112435-A1 discloses a folding bearing structure for a stroller. The folding mechanism allows for a reduction in the spacing between the two rear wheels and enables a rotation of the wheels in the horizontal plane when the wheels are in a second position. However, the folding process is complex and the stroller still has a considerable size when folded. Also, the wheels are not pulled towards a base frame but only towards each other. The present invention introduces a stroller framework that simplifies the folding process and reduces the overall size of the stroller when folded by moving the wheels towards each other and towards a central base frame.

US-20110248840-A1 discloses a stroller with a folding mechanism. However, the folding process is complex and requires multiple steps, making it inconvenient for users. The present invention introduces a stroller framework that allows for a single-action folding mechanism, thereby simplifying the process.

US-20130154322-A1 presents a stroller design with a central base frame and wheels. However, the folding mechanism does not include a lever that his adapted to hold a bassinet and actuates the folding mechanism of the wheels by moving the lever towards the central base frame. The proposed patent application addresses this issue by introducing a folding mechanism that pulls the wheels towards the central base frame, when the bassinet holding lever is moved towards the central base frame thereby reducing the width of the stroller when folded and the height at the same time.

US-20130221636-A1 discloses a stroller with a swivelling lever connected to a child carrying module. However, the lever does not contribute to the folding mechanism also the base frame itself is collapsed to reduce the width of the stroller frame instead of collapsing the wheels toward a central base frame. In contrast, the present invention provides a stroller framework where the swivelling lever contributes to the folding mechanism, thereby enhancing the ease of folding and unfolding the stroller.

US-20140306428-A1 discloses a folding bearing structure for a stroller. The folding mechanism allows for a lateral reduction in the spacing between the wheels and enables a rotation of the wheels in the horizontal plane when the wheels are in a second position by collapsing the base frame. However, the folding process is complex and the stroller still has a considerable size when folded. The present invention introduces a stroller framework that simplifies the folding process and reduces the overall size of the stroller when folded.

US-9505423-B2 discloses a stroller with a folding mechanism. However, the folding process is complex and requires multiple steps, making it inconvenient for users. The width of the stroller is reduced by collapsing the frame itself. The present invention introduces a stroller framework that allows for a single-action folding mechanism, thereby simplifying the process.

WO2018141785A1 teaches a stroller design with a central base frame and wheels. The handle is collapsible towards the base frame. Independently the rear wheels are foldable towards the base frame The present invention addresses this issue by introducing a folding mechanism that pulls the wheels towards the central base frame when folding the bassinet carrying leaver towards the base frame in a single movement.

The present patent application differs from each of the above documents in that it introduces a stroller framework with a single-action folding mechanism. This mechanism allows for a reduction in the width of the stroller when folded by pulling the wheels towards the central base frame. Furthermore, the swivelling lever in the proposed design contributes to the folding mechanism, enhancing the ease of folding and unfolding the stroller. None of the above documents disclose or suggest such a design.

In general, in a first aspect, the framework of a stroller is featured. This framework includes a longitudinal central base frame with a swivelling lever that is connected to the base frame via a common pivoting element, such as a hinge. The lever is provided to hold a child carrying module, such as a bassinet or seat. The framework also includes front wheel(s) and/or back wheel(s) that are arranged on either end of the central base frame. A folding mechanism for the wheels is also included, via which they are foldable towards the central base frame and the front wheels towards the back wheels and/or the back wheels towards the front wheels, thereby reducing the width of the stroller framework.

Embodiments of the framework may include one or more of the following features. The framework may further comprise a first transmission element connected to the swivelling lever, wherein the first transmission element is adapted to transmit a pivoting movement between the lever and the base frame to the folding mechanism such that the wheels are pulled and folded towards the central base frame when the lever is pivoted towards the central base frame.

The transmission element may allow an actuation in both directions such that a folding movement of a wheel towards the central base frame may actuate the lever towards the central base frame.

The wheels may be arranged on the base frame via suspension arms.

The folding mechanism may actuable connect the central base frame with the suspension arms and/or wheels via linkage elements. The suspension arms may be connected via a common rotating axis within the base frame. The transmission element and/or the lever may be located at and/or associated with one end of the central base frame. The folding mechanism may comprise two folding devices, one folding device for each wheel or set of wheels of two separate axes on either end of the central base frame. The central base frame may comprise a second transmission element that is connected to the first transmission element and to the first folding device of one axis, which second transmission element forwards the actuation/swivelling of the lever or the folding movement of the wheels, located at the same end of the central base frame, through/along the central base frame to the second folding device for a concerted folding movement of wheels on both ends of the central base frame.

The first transmission element may be a hinged two-part element that translates a lifting or pulling force into a rotational force provided to such that a swivelling/pivoting movement between the central base frame and the lever is translated into a rotational movement of the first and/or the second folding device and/or the second transmission. The folding devices may comprise a central point of contact with the second transmission element and/or an extension to each wheel of the according axis, wherein the extension is pivotably connected to the wheel or its suspension such that a rotation of the folding device / the second transmission pulls the wheel towards the central base frame or pushes it away from the base frame. The swivelling lever may be connected to a transmission element.

According to an embodiment of the present invention the folding mechanism and/or the first folding device and/or the second folding device are located in a hollow part of the central base frame and/or the lever preferably such that the fingers of a child may not be injured by the folding mechanism.

In one possible configuration, the stroller framework comprises a base frame and a lever. The lever is connected to the base frame and is provided to hold a carrying module. The specific design and orientation of the base frame and lever can vary to accommodate different types of carrying modules.

In another possible configuration, the stroller framework includes a transmission element that allows actuation. The specific design and function of the transmission element can vary to allow for different types of actuations.

In yet another possible configuration, the wheels of the stroller framework are arranged on the base frame. The specific method of arranging the wheels on the base frame can vary to accommodate different types of wheels and suspension systems. In a further possible configuration, the stroller framework includes a folding mechanism that connects the base frame with the wheels. The specific design and function of the folding mechanism can vary to accommodate different types of wheels and base frames.

In another possible configuration, the suspension arms of the stroller framework are connected within the base frame. The specific method of connecting the suspension arms within the base frame can vary to accommodate different types of suspension arms and base frames.

In a further possible configuration, the transmission element and/or the lever of the stroller framework are associated with the base frame. The specific location of the transmission element and/or the lever in relation to the base frame can vary to accommodate different types of transmission elements, levers, and base frames.

In yet another possible configuration, the folding mechanism of the stroller framework comprises folding devices for the wheels. The specific number and configuration of folding devices can vary to accommodate different types of wheels and folding mechanisms.

In a further possible configuration, the base frame of the stroller framework comprises a transmission element that is connected to a folding device. The specific number and configuration of transmission elements and folding devices can vary to accommodate different types of base frames, transmission elements, and folding devices.

In another possible configuration, the transmission element of the stroller framework translates a force, e.g., a translational force, into a rotational force of the folding mechanism. The specific type of transmission element and force can vary to accommodate different types of forces and transmission elements.

In a further possible configuration, the folding devices of the stroller framework comprise a point of contact with a transmission element and an extension to the wheels. The specific configuration of folding devices, transmission elements, and wheels can vary to accommodate different types of folding devices, transmission elements, and wheels.

Introducing the stroller framework, it is designed with a novel folding mechanism that allows for a single-action folding. This mechanism is designed to reduce the width of the stroller when folded by pulling the wheels towards a central base frame. This central base frame, which can also be referred to as a longitudinal central base frame, serves as the main structural component of the stroller framework. It is designed to support the weight of the stroller and its contents, and provides a stable platform for the attachment of other components such as the wheels and the child carrying module.

The child carrying module, which can be e.g., a bassinet or a toddler seat, is attached to /supported by a swivelling lever. This lever is pivotally connected to the central base frame via a common pivoting element, such as a hinge. The lever is designed to hold the child carrying module and may also be a part of the folding mechanism. When the lever is pivoted towards the central base frame, it may actuate the folding mechanism, causing the wheels to be pulled and folded towards the central base frame. This action reduces the width of the stroller framework, making it more compact and easier to store or transport.

The wheels of the stroller are arranged on either end of the central base frame. They are preferably attached to the base frame via suspension arms, which may allow the wheels to pivot towards the central base frame when the folding mechanism is actuated. The folding mechanism connects the central base frame with the suspension arms and/or wheels via linkage elements. These linkage elements transmit the movement from the folding mechanism to the wheels, causing them to fold towards the central base frame. There may be arranged further hinging elements on the wheel suspension that are passive, thus not involved in the active folding process but rather provided for a sturdy attachment of the wheel to the base frame.

In some cases, the folding mechanism may comprise two folding devices, one for each wheel or set of wheels on two separate axes on either end of the central base frame. These folding devices are designed to rotate upon the actuation of the folding mechanism, pulling the wheels towards the central base frame. The rotation of the folding devices may be transmitted via a central rod or rotating rod, which is connected to a connection piece or second folding device. This second folding device is assigned to the front wheels and may be located in the frame and/or between the front wheels.

In some cases, the folding of the wheels towards the central base frame may be independent from the downwards movement of the lever towards the central base frame. This can be implemented by disengaging a fixation for the wheel position, which could release the wheel and by holding the stroller rotated by 90°, such that one set of wheels is, for example, vertically, above the other one. The gravitational force on the upper wheels folding them towards the base frame would then be translated into a rotational movement of the first folding device of the folding mechanism which in return would fold in the front wheels via the second folding mechanism.

Thus, the stroller framework is designed to allow for a single-action folding mechanism, reducing the width of the stroller when folded by pulling the wheels towards the central base frame. This design provides a more compact and convenient stroller framework, improving upon the limitations of existing stroller designs.
**Figure 1** is an isometric view of an unfolded stroller frame, showcasing the pivotal connection between the lever and the central base frame for folding the stroller frame into a compact state.
**Figure 2** depicts the same stroller as in Figure 1, but in a folded state, demonstrating the lateral folding of the wheels towards the central base frame for compactness.
**Figure 3** provides an isometric view of the folding mechanism section of the rear wheel(s), illustrating the actuation of the wheel suspension arms between the folded and unfolded state through linkage elements and the folding element.
**Figure 4** shows a detailed isometric view of one of the front wheels, highlighting the actuation of the wheel suspension and linkage element by the folding mechanism for a folding movement of the wheel.
**Figure 5** presents an isometric cross-section view through the lever and the central base frame, revealing the extension of the second transmission element along the longitudinal axis of the central base frame.
**Figure 6** is an isometric cross-sectional view through the central base frame transverse to its longitudinal axis, depicting the transfer of the lever's movement during folding towards the central base frame onto the folding device and/or the second transmission element and from the folding device to the wheel or the wheel suspension respectively.
**Figure 7** shows an isometric cross-sectional view through the central base frame transverse to its longitudinal axis, illustrating the front part of the stroller frame, particularly the transfer of the lever's movement during folding and unfolding towards the central base frame onto the folding device and from the folding device to the wheel or the wheel suspension respectively.

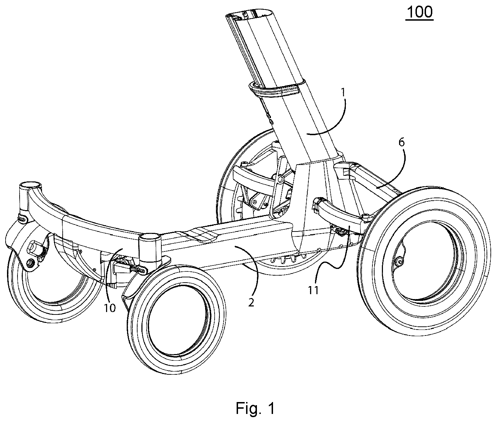

Referring to Fig. 1, the stroller frame 100 is depicted in an unfolded state. The stroller frame includes a lever 1 and a central base frame 2. These two components are pivotally connected, allowing the stroller frame to fold into a compact state. The lever 1 is designed to hold a child carrying module, such as a bassinet or a toddler seat. In the unfolded state, the lever 1 is positioned with an angle to the central base frame 2, that is larger than 0°, and can be preferably between 30° and 90°. This angle allows for a comfortable positioning of the child carrying module and contributes to the stability of the stroller frame.

The central base frame 2 serves as the main structural component of the stroller frame. It is designed to support the weight of the stroller and its contents, and provides a stable platform for the attachment of other components such as the wheels and the child carrying module. The central base frame 2 is a longitudinal structure, extending from one end of the stroller frame to the other.

The wheels of the stroller are arranged on either end of the central base frame 2. They are attached to the base frame via suspension arms 6, 10, and 11. These suspension arms allow the wheels to pivot towards the central base frame 2 when the folding mechanism is actuated. In some cases, the suspension arms may be arranged in a parallel configuration, allowing the wheels to remain parallel to each other throughout the folding process. This configuration contributes to the compactness of the stroller frame when folded and enhances the stability of the stroller when in use.

These suspension arms 6, 10, and 11 are pivotally connected to the central base frame 2 and are designed to hold the front and back wheels of the stroller. The pivotal connection allows the wheels to fold towards the central base frame 2 when the folding mechanism is actuated. This folding action contributes to the compactness of the stroller frame when folded and enhances the stability of the stroller when in use.

It is to be understood that the suspension arms and their connection to the central base frame via a common rotating axis represent one possible configuration of the stroller frame. Other configurations may be possible without departing from the scope of the stroller framework. For instance, the suspension arms could be connected to the central base frame in a different manner, or the wheels could be attached to the suspension arms in a different configuration. The specific configuration of the suspension arms and their connection to the central base frame may be selected based on various factors, such as the desired folding action, the size and weight of the stroller, and the specific use case of the stroller.

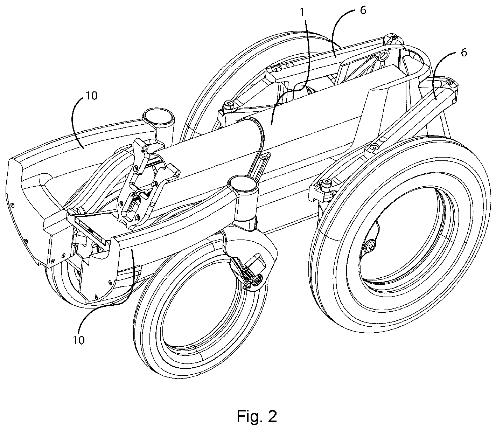

Referring to Fig. 2, the stroller frame is depicted in a folded state. In this state, the wheels on the suspension arms are folded laterally towards the central base frame 2. This lateral compaction of the wheels towards the central base frame 2 contributes to the compactness of the stroller frame when folded, making it easier to store or transport. The wheels are pulled towards the central base frame 2 by the actuation of the folding mechanism, which is triggered by the pivoting of the lever 1 towards the central base frame 2.

In some cases, the folding of the wheels towards the central base frame 2 may be independent from the downwards movement of the lever 1 towards the central base frame 2. This can be implemented by disengaging a fixation for the wheel position, which could release the wheel and by holding the stroller rotated by 90°, such that one set of wheels is, for example, vertically, above the other one. The gravitational force would then be translated into a rotational movement of the first folding device of the folding mechanism, which in return folds in the front wheels via the second folding device. This variation allows for a more flexible folding action, as the folding of the wheels can be controlled independently from the movement of the lever 1 and therefore compaction in the width independent of the height. This can be particularly useful in situations where the user wants to fold the stroller in a specific way, for example, to fit into a particular storage space.

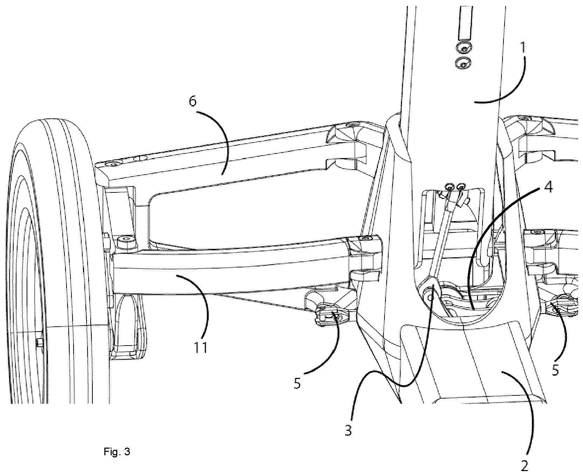

Turning to Fig. 3, a section of the folding mechanism at the rear wheel is depicted in detail. The folding mechanism includes a first folding device 4 connected to linkage elements 5. These components work together to actuate the wheel suspension arms 6 and 11 between the folded and unfolded state. The linkage elements 5 may serve as the connection between the folding device 4 and the suspension arms 6 and 11. The linkage elements 5 may transmit the movement from the folding device 4 to the suspension arms 6 and 11, causing the wheels to fold towards the central base frame 2.

In some cases, the section of the folding mechanism may be connected with the suspension arms and/or wheels via linkage elements. This configuration allows for a more flexible and controlled folding action, as the movement of the folding mechanism can be precisely transmitted to the wheels via the linkage elements. The specific configuration of the linkage elements and their connection to the folding mechanism and the suspension arms may be selected based on various factors, such as the desired folding action, the size and weight of the stroller, and the specific use case of the stroller.

In some cases, the stroller framework may include two folding devices 4 and 8, one for each wheel or set of wheels of two separate axes e.g., on either end of the central base frame. This configuration allows for a more balanced and symmetrical folding action, as when each wheel or set of wheels can be folded towards the central base frame independently. The folding devices, which can be referred to as first folding device 4 and second folding device 8, are designed to rotate upon the actuation of the folding mechanism, pulling the wheels towards the central base frame.

The rear wheel attachment structures may comprise two parallel suspension elements as part of the suspension arms which attach the wheels to the central base frame. These suspension elements, which can be referred to as suspension arms 6 and 11, allow the rear wheels to remain parallel to each other throughout the folding process. This configuration contributes to the compactness of the stroller frame when folded and enhances the stability of the stroller when in use.

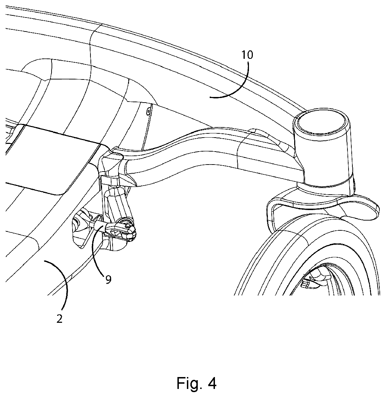

Referring to Fig. 4, a detailed view of one of the front wheels of the stroller framework is depicted. The front wheel may be attached to the stroller framework via a suspension arm 10. This suspension arm 10 is designed to pivotally connect the front wheel to the central base frame 2, allowing the front wheel to fold towards the central base frame 2 and preferably toward the back wheels when the folding mechanism is actuated.

The folding mechanism actuates the suspension arm 10 via a linkage element 9. This linkage element 9 serves as a connection between the folding mechanism, in particular the folding device 8, and the suspension arm 10, transmitting the movement from the folding mechanism to the suspension arm 10. When the folding mechanism is actuated, the linkage element 9 pulls on the suspension arm 10, causing the front wheel to fold towards the central base frame 2. This folding action contributes to the compactness of the stroller framework when folded, making it easier to store or transport.

In some cases, the first transmission element 3 and/or the lever 1 may be located at one end of the central base frame 2. This configuration allows for a more balanced and symmetrical folding action, as the movement of the lever 1 towards the central base frame 2 can be precisely transmitted to the front wheel via the second transmission element 7, the folding device 8 and the linkage element 9. The specific configuration of the first transmission element 3 and/or the lever 1 and their location on the central base frame 2 may be selected based on various factors, such as the desired folding action, the size and weight of the stroller, and the specific use case of the stroller.

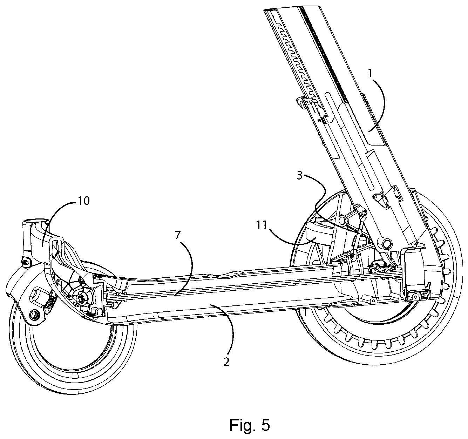

Referring to Fig. 5, a cross-sectional view through the lever 1 and the central base frame 2 is depicted. This view reveals the extension of the second transmission element 7 along the longitudinal axis of the central base frame 2. The second transmission element 7 may be a pivotal component of the folding mechanism, as it is designed to forward the actuation or swivelling of the lever 1 or the folding movement of the wheels where the lever is located, e.g., the back wheels through the central base frame 2 to the second folding device 8.

In some cases, the folding mechanism may be designed to translate a gravitational force of the lever falling towards the central base frame or the falling of one set of wheels towards the base frame into a rotational movement of the folding mechanism. This can be particularly useful when the stroller is held in a rotated position, such that one set of wheels is vertically above the other one. In this configuration, the gravitational force acting on the wheels and/or the lever 1 can be translated into a rotational movement of the folding mechanism and thus the second transmission element 7. This rotational movement, in turn, actuates the folding mechanism, causing the front wheels to fold towards the central base frame 2. This variation allows for a more flexible folding action, as the folding of the front wheels can be controlled independently from the movement of the lever 1.

It is to be understood that the inclusion of the second transmission element 7 and its function in the folding mechanism represent one possible configuration of the stroller framework. Other configurations for transmitting the wheel actuation or lever actuation to the wheels of a second axis may be possible without departing from the scope of the stroller framework. For instance, the second transmission element 7 could be designed to forward the actuation or swivelling of the lever 1 or the folding movement of the wheels in a different manner, or the second transmission element 7 could be located in a different position within or along the central base frame 2. The specific configuration of the second transmission element 7 and its function in the folding mechanism may be selected based on various factors, such as the desired folding action, the size and weight of the stroller, and the specific use case of the stroller.

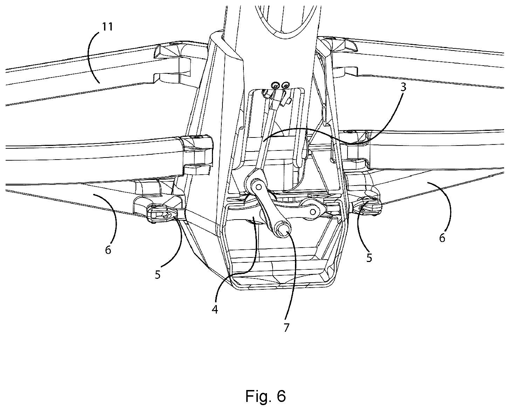

Referring to Fig. 6, a cross-sectional view through the central base frame 2 is depicted, transverse to its longitudinal axis. This view reveals the first transmission element 3, which is connected to the swivelling lever 1. The first transmission element 3 is adapted to transmit a pivoting movement between the lever 1 and the base frame 2 to the folding mechanism which in turn may be rotated from its original orientation. This transmission allows the wheels to be pulled and folded towards the central base frame 2 when the lever 1 is pivoted towards the central base frame 2 such that the rotation of the folding mechanism pulls or pushes the linkage elements.

In some cases, the first transmission element 3 may allow actuation in both directions. This means that a folding movement of a wheel towards the central base frame 2 can also actuate the lever 1 towards the central base frame 2. This configuration provides a more flexible folding action, as the folding of the wheels can be controlled independently from an active or direct actuation the lever 1 by a user.

In some cases, the first transmission element 3 and/or the lever 1 may be located at one end of the central base frame 2. This configuration allows for a more balanced and symmetrical folding action, as the movement of the lever 1 towards the central base frame 2 can be precisely and preferably symmetrically transmitted to the wheels of that axis via the first transmission element 3. The specific location of the first transmission element 3 and/or the lever 1 on the central base frame 2 may be selected based on various factors, such as the desired folding action, the size and weight of the stroller, and the specific use case of the stroller.

In some cases, the first transmission element 3 may be a hinged two-part element. This configuration may allow the first transmission element 3 to translate a lifting or pulling force into a rotational force. This rotational force is then applied to the folding mechanism, causing the wheels to fold towards the central base frame 2. This configuration provides a more controlled and precise folding action, as the rotational force can be precisely adjusted based on the lifting or pulling force applied to the first transmission element 3.

In some cases, the swivelling lever 1 may be connected to a transmission element, which can be the first transmission element 3. This configuration allows the movement of the lever 1 to be precisely transmitted to the wheels via the transmission element. This configuration enhances the ease of folding and unfolding the stroller, as the user can control the folding action by simply moving the lever 1.

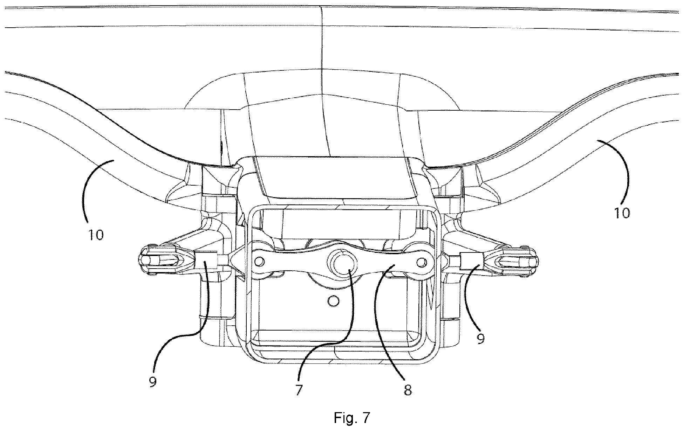

Referring to Fig. 7, a cross-sectional view through the central base frame 2 is depicted, transverse to its longitudinal axis. This view reveals the front part of the stroller frame, particularly the central base frame showing the distal end of the second transmission element 7. The second transmission element 7 is adapted to transfer the movement of the lever 1 during folding and unfolding towards the central base frame 2 onto the second folding device 8. From the second folding device 8, the movement is transferred to the linkage element 9 onto the wheel or the wheel suspension 10 respectively.

In some cases, the rotation of the second transmission element 7 may further be transmitted to the second folding device 8. The second folding device 7 may be assigned to the front wheels and may be located in the frame and/or between the front wheels. This configuration allows for a more balanced and symmetrical folding action, as the movement of the lever 1 towards the central base frame 2 can be precisely transmitted to the front wheels via the second transmission element 7 and the second folding device 8. The specific location of the second transmission element 7 and the second folding device 8 within the central base frame 2 may be selected based on various factors, such as the desired folding action, the size and weight of the stroller, and the specific use case of the stroller.

## Claims

1. A stroller framework comprising:
- A longitudinal central base frame (2) with a swivelling lever (1) that is connected to the base frame (2) via a common pivoting element, such as a hinge,
- the lever (1) is provided to hold a child carrying module, such as a bassinet,
- front wheel(s) and/or back wheel(s) that are arranged on either end of the central base frame (2),
- a folding mechanism for the wheels via which they are foldable towards the central base frame (2) and the front wheels towards the back wheels and/or the back wheels towards the front wheels, whereby the width of the stroller framework is reduced.

2. The stroller framework according to claim 1, further comprising a first transmission element (3) connected to the swivelling lever (1), wherein the first transmission element (3) is adapted to transmit a pivoting movement between the lever (1) and the base frame (2) to the folding mechanism such that the wheels are pulled and folded towards the central base frame when the lever (1) is pivoted towards the central base frame (2).

3. The stroller framework according to claim 2, wherein the transmission element (3) allows for an actuation in both directions such that a folding movement of a wheel towards the central base frame (2) actuates the lever (1) towards the central base frame (2).

4. The stroller framework according to any one of claims 1 to 3, wherein the wheels are arranged on the base frame via suspension arms (6, 10, 11).

5. The stroller framework according to claim 4, wherein the folding mechanism connects the central base frame (2) with the suspension arms (6, 10, 11) and/or wheels via linkage elements (5, 9).

6. The stroller framework according to claims 4 or 5, wherein the suspension arms (10, 11) are connected via a common rotating axis, namely a transmission element (7), within the base frame (2).

7. The stroller framework according to any one of claims 2 to 6, wherein the transmission element (3) and/or the lever (1) are located at and/or associated with one end of the central base frame (2).

8. The stroller framework according to any one of claims 1 to 7, wherein the folding mechanism comprises two folding devices (4, 8), one folding device (4, 8) for each wheel or set of wheels of two separate axes on either end of the central base frame.

9. The stroller framework according to any one of claims 2 to 8, wherein the central base frame (2) comprises a second transmission element (7) that is connected to the first transmission element (3) and to the first folding device (4) of one axis, which forwards the actuation/swivelling of the lever (1) or the folding movement of the wheels, located at the same end of the central base frame (2), through the central base frame (2) to the second folding device (8) for a concerted folding movement of wheels on both ends of the central base frame (2).

10. The stroller framework according to any one of claims 2 to 9, wherein the first transmission element (3) is a hinged two-part element that translates a lifting or pulling force into a rotational force provided to such that a swivelling/pivoting movement between the central base frame (2) and the lever (1) is translated into a rotational movement of the first (4) and/or the second (8) folding device and/or the second transmission (7).

11. The stroller framework according to any one of claims 8 to 10, wherein the folding devices (4, 8) comprise a central point of contact with the second transmission element (7) and an extension to each wheel of the according axis, wherein the extension is pivotably connected to the wheel or its suspension such that a rotation of the folding device (4, 8) / the second transmission (7) pulls the wheel towards the central base frame (2) or pushes it away from the base frame (2).

12. The stroller framework according to any one of claims 1 to 11, wherein the swivelling lever (1) is connected to a transmission element (3).
